(19) Europäisches Patentamt / European Patent Office / Office européen des brevets

(11) **EP 4 773 215 A1**

(12) **EUROPEAN PATENT APPLICATION**

(43) Date of publication:
08.07.2026 Bulletin 2026/28

(21) Application number: 25226131.8

(22) Date of filing: 22.12.2025

(51) International Patent Classification (IPC):
$H01M\ 4/136$ (2010.01)    $H01M\ 4/36$ (2006.01)
$H01M\ 4/58$ (2010.01)    $H01M\ 4/62$ (2006.01)
$H01M\ 10/0525$ (2010.01)

(52) Cooperative Patent Classification (CPC):
H01M 4/366; H01M 4/136; H01M 4/5825;
H01M 4/625; H01M 10/0525

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.12.2024 JP 2024231840

(71) Applicant: Toyota Jidosha Kabushiki Kaisha
Toyota-shi, Aichi-ken 471-8571 (JP)

(72) Inventors:
• ISHIGAKI, Yuki
Toyota-shi, Aichi-ken 471-8571 (JP)
• KOSAKA, Daichi
Toyota-shi, Aichi-ken 471-8571 (JP)
• MAHARA, Takanori
Toyota-shi, Aichi-ken 471-8571 (JP)
• KINOSHITA, Taku
Toyota-shi, Aichi-ken 471-8571 (JP)

(74) Representative: Cabinet Beau de Loménie
103, rue de Grenelle / CS 90800
75340 Paris Cedex 07 (FR)

(54) **POSITIVE ELECTRODE ACTIVE MATERIAL, ELECTRODE, AND BATTERY**

(57) A positive electrode active material comprises a primary particle (1) and a covering (5), wherein the primary particle (1) includes an olivine-type phosphate compound, the covering (5) covers at least part of a surface of the primary particle (1), the covering (5) includes carbon and Me, and Me is at least one type selected from the group consisting of a Group 4 metallic element, a Group 5 metallic element, a Group 6 metallic element, a Group 9 metallic element, a Group 10 metallic element, a Group 13 metallic element, and boron (B).

FIG.1

EP 4 773 215 A1

**Description**

CROSS REFERENCE TO RELATED APPLICATIONS

This nonprovisional application is based on Japanese Patent Application No. 2024-231840 filed on December 27, 2024, with the Japan Patent Office, to which the skilled person can refer when considering the present disclosure.

BACKGROUND

Field

The present disclosure relates to a positive electrode active material, an electrode, and a battery.

Description of the Background Art

Japanese Patent Laying-Open No. 2015-56222 discloses a positive electrode active material that contains lithium phosphate ($Li_3PO_4$; which may be abbreviated as "LPO" hereinafter) in lithium ion composite oxide having an olivine-type structure and that has a carbon covering layer on the surface thereof.

SUMMARY

As a positive electrode active material, olivine-type phosphate compounds have been developed. Conventionally, suggestions have been made for enhancing rate properties by providing an LPO covering layer on the surface of a carbon covering layer covering an olivine-type phosphate compound, or by providing a carbon covering layer on the surface of an LPO covering layer covering an olivine-type phosphate compound. However, there is still room for improvement in output properties and endurance.
An object of the present disclosure is to balance output properties and endurance well.
Hereinafter, the technical configuration and effects of the present disclosure will be described. It should be noted that the action mechanism according to the present disclosure includes presumption. The action mechanism does not limit the technical scope of the present disclosure.

A positive electrode active material comprising:

a primary particle; and
a covering, wherein
the primary particle includes an olivine-type phosphate compound,
the covering covers at least part of a surface of the primary particle,
the covering includes carbon and Me, and
Me is at least one type selected from the group consisting of a Group 4 metallic element, a Group 5 metallic element, a Group 6 metallic element, a Group 9 metallic element, a Group 10 metallic element, a Group 13 metallic element, and boron (B).

According to a novel finding of the present disclosure, when the covering is a mixed layer including carbon (C) and Me, output properties and endurance are expected to be well balanced.
The positive electrode active material according to [1], wherein

the Group 4 metallic element is titanium (Ti) or zirconium (Zr),
the Group 5 metallic element is vanadium (V) or niobium (Nb),
the Group 6 metallic element is chromium (Cr), molybdenum (Mo), or tungsten (W),
the Group 9 metallic element is cobalt (Co),
the Group 10 metallic element is nickel (Ni), and
the Group 13 metallic element is aluminum (Al).

The positive electrode active material according to [1] or [2], wherein TEM-EDS analysis reveals the presence of a first region at which carbon and Me are detected, inside the covering.
The positive electrode active material according to [3], wherein the first region has a thickness of 1 nm or more.
When the thickness of the first region is 1 nm or more, output properties and endurance are expected to be well balanced.

The positive electrode active material according to [3] or [4], wherein at least part of the first region is present within an area that extends for 20 nm or less from a surface of the covering.

When at least part of the first region is present within an area that extends for 20 nm or less from the surface of the covering, output properties and endurance are expected to be well balanced.

The positive electrode active material according to any one of [3] to [5], wherein the covering includes a polyanion-structure-containing compound including a polyanion structure in which an oxygen atom is coordinated to Me.

The positive electrode active material according to [6], wherein the polyanion-structure-containing compound has an amorphous structure.

The positive electrode active material according to any one of [1] to [7], wherein the primary particles form a secondary particle.

The positive electrode active material according to any one of [1] to [8], wherein the olivine-type phosphate compound is lithium manganese iron phosphate.

An electrode comprising:

a positive electrode layer, wherein
the positive electrode layer includes the positive electrode active material according to any one of [1] to [9].

A battery comprising the electrode according to [10].

The battery according to [11], having a bipolar structure.

In the following, an embodiment of the present disclosure (which may be simply called "the present embodiment" hereinafter) and an example of the present disclosure (which may be simply called "the present example" hereinafter) will be described. It should be noted that neither the present embodiment nor the present example limits the technical scope of the present disclosure. The present embodiment and the present example are illustrative in any respect. The present embodiment and the present example are non-restrictive. The technical scope of the present disclosure encompasses any modifications within the meaning and the scope equivalent to the terms of the claims. For example, it is originally planned that any configurations of the present embodiment may be optionally combined.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating the outermost surface of a primary particle and the vicinity thereof.
Fig. 2 is another conceptual view illustrating the outermost surface of a primary particle and the vicinity thereof.
Fig. 3 is a conceptual view illustrating a secondary particle according to the present embodiment.
Fig. 4 is a schematic flowchart illustrating a method of producing a positive electrode active material according to the present embodiment.
Fig. 5 is a schematic perspective view illustrating a battery according to the present embodiment.
Fig. 6 is a schematic view of a cross section cut along the line VI-VI in Fig. 5.
Fig. 7 is a table showing experiment results of Nos. 1 to 8 in Examples.

DESCRIPTION OF THE PREFERRED EMBODIMENTS

<Terms and Phrases>

Expressions such as "comprise", "include", and "have", and other similar terms are open-ended expressions. In the configuration expressed by an open-ended expression, in addition to an essential component, an additional component may or may not be further included. The expression "consist of" is a closed-end expression. However, even in a configuration that is expressed by a closed-end expression, impurities present under ordinary circumstances as well as an additional element irrelevant to the technique of interest may be included. The expression "consist essentially of" is a semiclosed-end expression. A configuration expressed by a semiclosed-end expression tolerates addition of an element that does not substantially affect the fundamental, novel features of the technique of interest.

Expressions such as "may" and "can" are not intended to mean "must" (obligation) but rather mean "there is a possibility" (tolerance).

Regarding a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.

Expressions such as "first" and "second" are used solely for differentiating a plurality of elements from each other. Such expressions do not limit the scope of these elements. For example, these expressions are independent of the order and the significance of these elements.

For example, the expression "at least one of A and B" includes "A or B" and "A and B". "At least one of A and B" may also be expressed as "A and/or B".

Any geometric term should not be interpreted solely in its exact meaning. Examples of geometric terms include "parallel", "vertical", "orthogonal", and the like. For example, as long as substantially the same or similar functions are obtained, the relative direction, angle, distance, and the like may vary. Any geometric term herein may include tolerances and/or errors in terms of design, operation, production, and/or the like. The dimensional relationship in each figure may not necessarily coincide with the actual dimensional relationship. For the purpose of assisting understanding for the readers, the dimensional relationship in each figure may have been changed. For example, length, width, thickness, and the like may have been changed. A part of a given configuration may have been omitted.

A singular form may also include its plural meaning, unless otherwise specified. For example, a particle may mean a plurality of particles, a group of particles, and a powdery and granular material.

A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Each of "not less than" and "not more than" is represented by an inequality symbol with an equality symbol, e.g., "$\leq$, $\geq$". Each of "more than" and "less than" is represented by an inequality symbol without an equality symbol, e.g., "$<$, $>$". Any numerical value selected from a certain numerical range may be used as a new upper limit or a new lower limit. For example, any numerical value from a certain numerical range may be combined with any numerical value described in another location of the present specification or in a table or a drawing to set a new numerical range.

All the numerical values are regarded as being modified by the term "about". The term "about" may mean $\pm5\%$, $\pm3\%$, $\pm1\%$, and/or the like, for example. Each numerical value may be an approximate value that can vary depending on the implementation configuration of the technique of interest. Each numerical value may be expressed in significant figures. Unless otherwise specified, each measured value may be the average value obtained by multiple rounds of measurement. The number of rounds of measurement may be 3 or more, or may be 5 or more, or may be 10 or more. Generally, the greater the number of rounds of measurement is, the more reliable the average value is expected to be. Each measured value may be rounded off based on the number of the significant figures. Each measured value may include an error occurring due to the identification limit of the measurement apparatus, for example.

An apparatus, software, and/or the like used for measurement of various values is merely an example. It is possible to use a product similar to the apparatus and/or the like presented as an example. When a similar product is used, the measurement conditions may be adjusted to be suitable for the apparatus.

Transmission electron microscope energy dispersive X-ray spectroscopy (TEM-EDS) analysis of a primary particle is performed by the procedure described below. A positive electrode active material (powder) is embedded in resin to prepare a sample. By focused ion beam (FIB) or cross section polisher (CP), the sample is sliced. The sample is examined with a TEM. The magnification for the examination may be approximately from 10000 to 50000 times, for example.

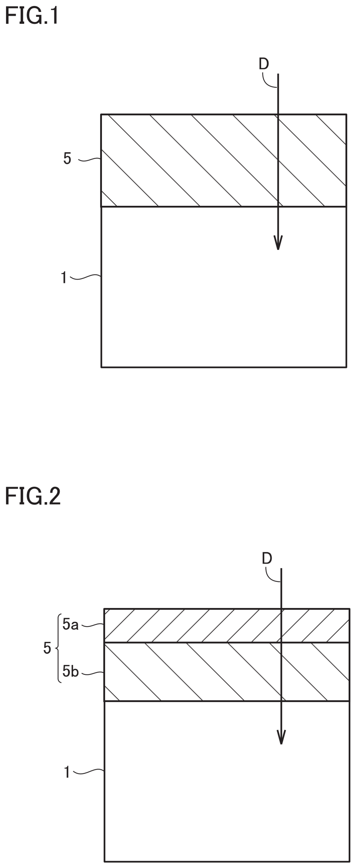

In the TEM image (a cross-sectional image), the substance adhered to the outer side of a primary particle is regarded as "a covering". Fig. 1 is a conceptual view illustrating the outermost surface of a primary particle and the vicinity thereof. A radial direction D is the direction of a normal to the surface of a primary particle 1. Line analysis is performed along the radial direction D. The analysis is performed at measurement points located at regular intervals (0.5 nm). For example, the analysis may be performed for a distance of 20 nm or more from the outermost surface of primary particle 1. When the olivine-type phosphate compound is LMFP, the elements to be measured are C, Me, manganese (Mn), and iron (Fe).

By the line analysis, the signal intensity (peak height) of the peak top of a target peak is identified. Based on the signal intensity of each element, the atom concentration of the element is calculated. The region where C is detected is regarded as "a covering 5". When both C and Me are detected, it is considered that covering 5 includes Me. The region where Mn and Fe are detected is regarded as "primary particle 1".

"D50" refers to a particle size in volume-based particle size distribution (cumulative distribution) at which the cumulative value reaches 50%. D50 is measured with a laser-diffraction particle size distribution analyzer, for example.

"Maximum Feret diameter" refers to the length of the long side of a circumscribing rectangular (an oblong or a square) that circumscribes the particle. When the circumscribing rectangular is square, the length of the long side refers to the length of a side.

The chemical composition of a compound may be measured by inductively coupled plasma atomic emission spectroscopy (ICP-AES). A sample (for example, a positive electrode active material) in an amount of 0.1 g is dissolved in a mixed acid (10 ml) of hydrochloric acid and sulfuric acid to prepare a sample solution. The sample solution is diluted to a proper concentration with the use of a volumetric flask. After dilution, composition analysis is carried out with an ICP-AES apparatus. For example, a product under the trade name "PS3520 UVDD II (manufactured by Hitachi High-Tech Science)" and/or the like may be used.

A stoichiometric composition formula represents a typical example of a compound. A compound may have a non-stoichiometric composition. For example, "$Al_2O_3$" is not limited to a compound where the ratio in amount of substance (the molar ratio) is "Al/O=2/3". "$Al_2O_3$" represents a compound that includes Al and O in any ratio in amount of substance, unless otherwise specified. For example, the compound may be doped with a trace element. Some of Al and/or O may be replaced by another element.

"Derivative" refers to a compound that is derived from its original compound by at least one partial modification selected from the group consisting of functional group introduction, atom replacement, oxidation, reduction, and other chemical reactions. The position of modification may be one position, or may be a plurality of positions. "Substituent" may include at least one selected from the group consisting of alkyl group, alkenyl group, alkynyl group, cycloalkyl group, unsaturated cycloalkyl group, aromatic group, heterocyclic group, halogen atom (F, Cl, Br, I, etc.), OH group, SH group, CN group, SCN group, OCN group, nitro group, alkoxy group, unsaturated alkoxy group, amino group, alkylamino group, dialkylamino group, aryloxy group, acyl group, alkoxycarbonyl group, acyloxy group, aryloxycarbonyl group, acylamino group, alkoxycarbonylamino group, aryloxy carbonylamino group, sulfonylamino group, sulfamoyl group, carbamoyl group, alkylthio group, arylthio group, sulfonyl group, sulfinyl group, ureido group, phosphoramide group, sulfo group, carboxy group, hydroxamic acid group, sulfino group, hydrazino group, imino group, silyl group, and the like, for example. These substituents may be further substituted. When there are two or more substituents, these substituents may be the same as one another or may be different from each other. A plurality of substituents may be bonded together to form a ring.

<Positive Electrode Active Material>

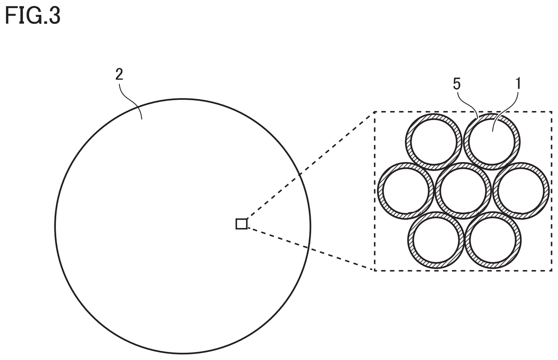

Fig. 3 is a conceptual view illustrating a secondary particle according to the present embodiment. A positive electrode active material includes primary particles 1 and covering 5. "Primary particle 1" is the smallest constituent unit of a particle. Primary particles 1 are not necessarily aggregated together, and may be present in isolation. Isolated primary particles 1 are also called single particles. Primary particles 1 may form a secondary particle 2. The positive electrode active material may be powder of secondary particles 2, for example. The D50 of the positive electrode active material may be 5 μm or more, or 10 μm or more, or 15 μm or more, or 20 μm or more, for example. The D50 of the positive electrode active material may be 30 μm or less, or 25 μm or less, or 20 μm or less, or 15 μm or less, or 10 μm or less, for example.

Secondary particle 2 is a group of primary particles 1. Secondary particle 2 may have any shape. Secondary particle 2 may be spherical, rod-like, prismatic, and/or the like, for example. When secondary particle 2 is spherical, packing properties are expected to be enhanced, for example. The sphericity of secondary particle 2 may be 0.85 or more, or 0.90 or more, or 0.95 or more, for example. The sphericity of secondary particle 2 may be 1 or less, or 0.95 or less, or 0.90 or less, for example. "Sphericity" refers to the circularity in a scanning electron microscope (SEM) image (a two-dimensional image). The sphericity (circularity) is determined by the following equation.

$$\psi = 4\pi S/L^2$$

$\psi$: Sphericity (circularity)
$\pi$: Circular constant
S: Cross-sectional area of secondary particle 2 (the area of a region surrounded by the contour of secondary particle 2)
L: Perimeter of secondary particle 2 (the length of the contour of secondary particle 2)

The sphericity refers to the arithmetic mean of 30 secondary particles 2.

Primary particle 1 may have any shape. Primary particle 1 may be spherical, rod-like, prismatic, and/or the like, for example. The maximum Feret diameter of primary particle 1 may be from 10 to 90 nm, for example. The maximum Feret diameter of primary particle 1 may be 20 nm or more, or 30 nm or more, or 40 nm or more, or 50 nm or more, or 60 nm or more, or 70 nm or more, or 80 nm or more, for example. The maximum Feret diameter of primary particle 1 may be 80 nm or less, or 60 nm or less, for example. The maximum Feret diameter of primary particle 1 refers to the arithmetic mean of 30 primary particles 1.

Covering 5 (Fig. 1) covers at least part of the surface of primary particle 1. Covering 5 may cover the entire surface of primary particle 1.

Covering 5 includes C and Me. Covering 5 may include amorphous carbon and/or the like, for example.

The binding state of Me included in covering 5 is not limited. Me may be present in the form of a polyanion-structure-containing compound that includes a polyanion structure in which an oxygen atom is coordinated to Me. For example, Me may be present in the form of a polyanion structure in which Me is surrounded by a plurality of $O^{2-}$ anions. The

polyanion structure, together with a counter cation, may form a polyanion-structure-containing compound.

Me is at least one type selected from the group consisting of a Group 4 metallic element, a Group 5 metallic element, a Group 6 metallic element, a Group 9 metallic element, a Group 10 metallic element, a Group 13 metallic element, and B, and preferably, it is an element that can form a polyanion structure. The Group 4 metallic element is titanium (Ti) or zirconium (Zr), for example. The Group 5 metallic element is vanadium (V) or niobium (Nb), for example. The Group 6 metallic element is chromium (Cr), molybdenum (Mo), or tungsten (W), for example. The Group 9 metallic element is cobalt (Co), for example. The Group 10 element is nickel (Ni), for example. The Group 13 metallic element is aluminum (Al), for example.

In the polyanion-structure-containing compound, the counter cation that forms the polyanion structure together may be $Li^+$, $Na^+$, $K^+$, $Rb^+$, $Cs^+$, or the like, for example.

The polyanion-structure-containing compound may have an amorphous structure, or may have a crystal structure. In the case where the polyanion-structure-containing compound has an amorphous structure, when the TEM image does not have a visible lattice pattern and it is rather hazed, the presence of an amorphous structure can be identified. Alternatively, X-ray diffraction (XRD) measurement of the powder may be performed to identify crystallinity. When the polyanion-structure-containing compound has an amorphous structure, output properties and endurance are expected to be further improved.

When covering 5 includes Me in the form of a polyanion-structure-containing compound, the amount-of-substance concentration (concentration in terms of amount of substance) of Me in the covering is determined from the results of line analysis of a TEM image. The amount-of-substance concentration is converted into the mass concentration, and thereby the mass concentration of the polyanion-structure-containing compound in covering 5 is determined.

TEM-EDS analysis reveals the presence of a first region 5a at which C and Me are detected, inside the covering 5. When C and Me are detected throughout the entire covering 5, covering 5 is first region 5a. Covering 5 may have a second region at which Me is not detected. When the second region is present, it is preferably present on the primary particle side within the covering 5. Preferably, the outermost surface of covering 5 is the first region. When the first region is present at the outermost surface of covering 5, output properties and endurance are expected to be further improved.

First region 5a may extend for 1 nm or more from the surface of covering 5. The thickness of first region 5a in the radial direction D may be 1 nm or more, or 3 nm or more, or 5 nm or more, or 10 nm or more, for example. The thickness of first region 5a in the radial direction D may be 50 nm or less, or 40 nm or less, or 30 nm or less, or 20 nm or less, for example.

Referring to Fig. 2, first region 5a may be present 20 nm or less away from the interface between primary particle 1 and covering 5. In other words, the thickness of a second region 5b in the radial direction D is less than 20 nm. The thickness of second region 5b may be 1 nm or more, or 3 nm or more, or 5 nm or more, for example. The thickness of second region 5b may be 18 nm or less, or 15 nm or less, or 13 nm or less, or 10 nm or less, for example.

The thickness of covering 5 may be more than 1 nm, or 3 nm or more, or 5 nm or more, or 10 nm or more, for example. The thickness of covering 5 may be 50 nm or less, or 40 nm or less, or 30 nm or less, or 20 nm or less, for example.

The mass fraction of covering 5 relative to the mass of the positive electrode active material (olivine-type phosphate compound) may be 0.2% or more, or 0.5% or more, or 1% or more, or 2% or more, or 3% or more, or 4% or more. The mass fraction of covering 5 relative to the mass of the positive electrode active material may be 10% or less, or 9% or less, or 8% or less, or 7% or less, or 6% or less, or 5% or less.

The mass fraction of C relative to the mass of the positive electrode active material may be 0.1% or more. The mass fraction of C relative to the mass of the positive electrode active material may be 0.3% or more, or 0.5% or more, or 0.7% or more, or 1.0% or more, or 1.5% or more. The mass fraction of C relative to the mass of the positive electrode active material may be 5.0% or less, or 4.0% or less, or 3.0% or less, or 2.5% or less, or 2.0% or less.

The mass fraction of Me relative to the mass of the positive electrode active material may be 0.01% or more, or 0.05% or more, or 0.1% or more, or 0.15% or more, or 0.2% or more, or 0.25% or more, or 0.3% or more. The mass fraction of Me relative to the mass of the positive electrode active material may be less than 0.5%, or 0.45% or less, or 0.4% or less, or 0.35% or less, or 0.3% or less.

The ratio of Me in amount of substance relative to the amount of substance of lithium manganese iron phosphate may be 0.001 mol% or more, or 0.005 mol% or more, or 0.01 mol% or more, or 0.03 mol% or more, or 0.05 mol% or more, or 0.1 mol% or more. The ratio of Me in amount of substance relative to the amount of substance of lithium manganese iron phosphate may be 10 mol% or less, or 5 mol% or less, or 4 mol% or less, or 3 mol% or less.

When Me is included in the form of a polyanion-structure-containing compound, the mass fraction of the polyanion-structure-containing compound relative to the mass of the positive electrode active material may be 0.01% or more, or 0.05% or more, or 0.1% or more, or 0.15% or more, or 0.2% or more, or 0.25% or more, or 0.3% or more. The mass fraction of LPO relative to the mass of the positive electrode active material may be less than 0.5%, or 0.45% or less, or 0.4% or less, or 0.35% or less, or 0.3% or less. The mass fraction of LPO relative to the mass of the positive electrode active material may be not less than 0.01% and less than 0.5%, or may be from 0.05% to 0.3%, or may be from 0.1% to 0.3%.

Primary particle 1 includes an olivine-type phosphate compound. "Olivine-type" refers to a crystal structure belonging to the space group Pnma. The space group is identified by XRD measurement. Primary particle 1 may be a single-phase compound, for example. As long as it includes an olivine-type crystalline phase, primary particle 1 may further include a phase that belongs to another space group. Primary particle 1 may further include an amorphous phase and/or the like, for example.

The olivine-type phosphate compound may include lithium iron phosphate (LFP), lithium manganese phosphate (LMP), and/or the like, for example. In LMP, part of manganese (Mn) may be replaced by iron (Fe). Fe-replaced LMP is also called lithium manganese iron phosphate (LMFP). LMP may have a composition represented by the following general formula, for example.

$$Li_aMn_{1-x}Fe_xPO_4$$

For example, the relationship of $0.7 \leq a \leq 1.2$ may be satisfied. x may be 0 or more, or 0.05 or more, or 0.1 or more, or 0.2 or more, or 0.3 or more, or 0.4 or more, or 0.5 or more, or 0.6 or more, or 0.7 or more, or 0.8 or more, or 0.9 or more, for example. x may be 1 or less, or 0.9 or less, or 0.8 or less, or 0.7 or less, or 0.6 or less, or 0.5 or less, or 0.4 or less, or 0.3 or less, or 0.2 or less, or 0.1 or less, for example.

The olivine-type phosphate compound may be doped with an element (a dopant) other than lithium (Li), Mn, Fe, P, and oxygen (O). The doping amount (the fraction in amount of substance relative to the amount of substance of Li) may be from 0.01 to 0.1, for example. The dopant may include at least one selected from the group consisting of boron (B), nitrogen (N), a halogen, silicon (Si), sodium (Na), magnesium (Mg), aluminum (Al), chromium (Cr), scandium (Sc), titanium (Ti), vanadium (V), cobalt (Co), nickel (Ni), copper (Cu), zinc (Zn), gallium (Ga), germanium (Ge), selenium (Se), Sr, yttrium (Y), zirconium (Zr), niobium (Nb), molybdenum (Mo), indium (In), lead (Pb), bismuth (Bi), antimony (Sb), tin (Sn), tungsten (W), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), lutetium (Lu), and an actinoid, for example.

The positive electrode active material may further include another component as long as it includes an olivine-type phosphate compound. This another component may include lithium-nickel composite oxide (LNO), lithium-cobalt composite oxide (LCO), lithium-manganese composite oxide (LMO), and/or the like, for example. The mixing ratio (in mass) between the olivine-type phosphate compound and the another component may be "(olivine-type phosphate compound)/(another component)=9/1 to 1/9", or "(olivine-type phosphate compound)/(another component)=8/2 to 2/8", or "(olivine-type phosphate compound)/(another component)=7/3 to 3/7", or "(olivine-type phosphate compound)/(another component)=6/4 to 4/6", for example. The positive electrode active material may be a mixture of powder of the olivine-type phosphate compound and powder of the another component, for example.

The LNO may have a crystal structure belonging to the space group R-3m, for example. The LNO may have a composition represented by the following general formula, for example.

$$Li_{1-a}Ni_xM_{1-x}O_2$$

In the formula, the relationships of $-0.5 \leq a \leq 0.5$, $0 \leq x \leq 1$ are satisfied. M may include, for example, at least one selected from the group consisting of Co, Mn, and Al. For example, the relationship of $0<x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x \leq 1$ may be satisfied. For example, the relationship of $-0.4 \leq a \leq 0.4$, $-0.3 \leq a \leq 0.3$, $-0.2 \leq a \leq 0.2$, or $-0.1 \leq a \leq 0.1$ may be satisfied.

The LNO may include at least one selected from the group consisting of $LiNi_{0.9}Co_{0.1}O_2$, $LiNi_{0.9}Mn_{0.1}O_2$, and $LiNiO_2$, for example.

The LNO may be represented by the following general formula, for example. A compound represented by the following general formula may also be called "NCM".

$$Li_{1-a}Ni_xCo_yMn_zO_2$$

In the formula, the relationships of $-0.5 \leq a \leq 0.5$, $0<x<1$, $0<y<1$, $0<z<1$, $x+y+z=1$ are satisfied. For example, the relationship of $0<x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x<1$ may be satisfied. For example, the relationship of $0<y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y<1$ may be satisfied. For example, the relationship of $0<z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z<1$ may be satisfied.

NCM may include at least one selected from the group consisting of $LiN_{1/3}Co_{1/3}Mn_{1/3}O_2$, $LiNi_{0.4}Co_{0.3}Mn_{0.3}O_2$, $LiNi_{0.3}Co_{0.4}Mn_{0.3}O_2$, $LiNi_{0.3}Co_{0.3}Mn_{0.4}O_2$, $LiNi_{0.5}Co_{0.2}Mn_{0.3}O_2$, $LiNi_{0.5}Co_{0.3}Mn_{0.2}O_2$, $LiNi_{0.5}Co_{0.4}Mn_{0.1}O_2$, $LiNi_{0.5}Co_{0.1}Mn_{0.4}O_2$, $LiNi_{0.6}Co_{0.2}Mn_{0.2}O_2$, $LiNi_{0.6}Co_{0.3}Mn_{0.1}O_2$, $LiNi_{0.6}Co_{0.1}Mn_{0.3}O_2$, $LiNi_{0.7}Co_{0.1}Mn_{0.2}O_2$, $LiNi_{0.7}Co_{0.2}Mn_{0.1}O_2$, $LiNi_{0.8}Co_{0.1}Mn_{0.1}O_2$, and $LiNi_{0.9}Co_{0.05}Mn_{0.05}O_2$, for example.

The LNO may be represented by the following general formula, for example. A compound represented by the following general formula may also be called "NCA".

$$Li_{1-a}Ni_xCo_yAl_zO_2$$

In the formula, the relationships of $-0.5 \leq a \leq 0.5$, $0 < x < 1$, $0 < y < 1$, $0 < z < 1$, $x+y+z=1$ are satisfied. For example, the relationship of $0 < x \leq 0.1$, $0.1 \leq x \leq 0.2$, $0.2 \leq x \leq 0.3$, $0.3 \leq x \leq 0.4$, $0.4 \leq x \leq 0.5$, $0.5 \leq x \leq 0.6$, $0.6 \leq x \leq 0.7$, $0.7 \leq x \leq 0.8$, $0.8 \leq x \leq 0.9$, or $0.9 \leq x < 1$ may be satisfied. For example, the relationship of $0 < y \leq 0.1$, $0.1 \leq y \leq 0.2$, $0.2 \leq y \leq 0.3$, $0.3 \leq y \leq 0.4$, $0.4 \leq y \leq 0.5$, $0.5 \leq y \leq 0.6$, $0.6 \leq y \leq 0.7$, $0.7 \leq y \leq 0.8$, $0.8 \leq y \leq 0.9$, or $0.9 \leq y < 1$ may be satisfied. For example, the relationship of $0 < z \leq 0.1$, $0.1 \leq z \leq 0.2$, $0.2 \leq z \leq 0.3$, $0.3 \leq z \leq 0.4$, $0.4 \leq z \leq 0.5$, $0.5 \leq z \leq 0.6$, $0.6 \leq z \leq 0.7$, $0.7 \leq z \leq 0.8$, $0.8 \leq z \leq 0.9$, or $0.9 \leq z < 1$ may be satisfied.

NCA may include at least one selected from the group consisting of $LiNi_{0.7}Co_{0.1}Al_{0.2}O_2$, $LiNi_{0.7}Co_{0.2}Al_{0.1}O_2$, $LiNi_{0.8}Co_{0.1}Al_{0.1}O_2$, $LiNi_{0.8}Co_{0.17}Al_{0.03}O_2$, $LiNi_{0.8}Co_{0.15}Al_{0.05}O_2$, and $LiNi_{0.9}Co_{0.05}Al_{0.05}O_2$, for example.

<Method of Producing Positive Electrode Active Material>

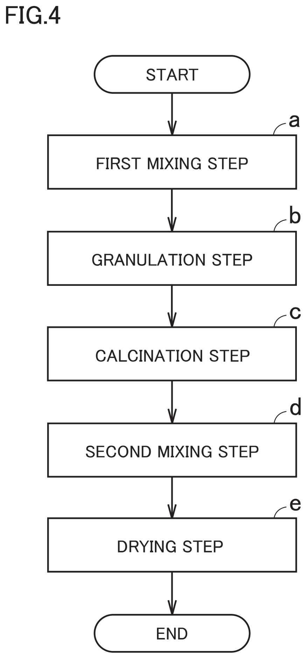

Fig. 4 is a schematic flowchart illustrating a method of producing a positive electrode active material according to the present embodiment. Hereinafter, "the method of producing a positive electrode active material according to the present embodiment" may be simply called "the present method". The present method may include "(a) a first mixing step", "(b) a granulation step", "(c) a calcination step", "(d) a second mixing step", and "(e) a drying step", for example.

(a) Mixing Step

This step involves mixing a manganese compound, a first lithium compound, a first phosphate compound, a first carbon source, and a first solvent to form a first slurry. In the following, a case for producing LMFP as a positive electrode active material will be described as an example. However, it should be noted that the positive electrode active material according to the present disclosure is not limited to LMFP.

For example, the manganese compound, the first lithium compound, the first phosphate compound, and an iron compound may be prepared in amounts that satisfy the composition ratio (in amount of substance) specified in the composition formula "$Li_aMn_{1-x}Fe_xPO_4$ ($0.7 \leq a \leq 1.2$, $0 \leq x \leq 1$)". The manganese compound may include manganese carbonate and/or the like, for example. The first lithium compound may include lithium hydroxide and/or the like, for example. The first phosphate compound may include lithium dihydrogen phosphate and/or the like, for example. The iron compound may include ferric phosphate and/or the like, for example.

The first carbon source is a raw material of C of the covering. The first carbon source may include a sugar, an organic acid, and/or the like, for example. The first carbon source may include glucose, sucrose, fructose, citric acid, and/or the like, for example. The amount of the first carbon source to be added in mass fraction relative to the raw material mixture may be from 1 to 20%, for example.

The first solvent may include water and/or the like, for example. The solid concentration of the first slurry in mass fraction may be from 20 to 40%, for example.

Wet grinding may be carried out to adjust the particle size in the first slurry. For example, wet grinding may be carried out to achieve a D50 from 0.10 to 1 $\mu$m.

(b) Granulation Step

This step involves forming precursor particles by drying the first slurry.

For example, spray drying may be carried out for granulation to produce precursor particles. The temperature at the air inlet may be from 230 to 270°C, for example. The temperature at the air outlet may be from 100 to 130°C, for example. The air intake pressure may be from 1.8 to 2.2 MPa, for example. The nozzle pressure of the spray nozzle may be from 0.1 to 0.3 MPa, for example.

(c) Calcination Step

This step involves performing heat treatment of the precursor particles to form first particles.

Any heat treatment furnace (such as, for example, an electric furnace, a muffle furnace, and/or the like) may be used. The atmosphere in this step may be an inert atmosphere, for example. The inert atmosphere may be a nitrogen atmosphere and/or the like, for example. The heat treatment temperature may be from 400 to 700°C, for example. The heat treatment time may be from 4 to 6 hours, for example. During the temperature-raising process in the calcination, instead of continuously raising the temperature, it is possible to temporarily pause raising the temperature at or near 200°C and maintain the temperature (200°C) for about 1 hour.

(d) Second Mixing Step

This step involves mixing the first particles, a second lithium compound, an Me source, a second carbon source, and a second solvent to form a second slurry.

The second lithium compound may include lithium hydroxide and/or the like, for example. The Me source may include boron oxide, titanium oxide, zirconium oxide, vanadium oxide, niobium oxide, chromium oxide, molybdenum oxide, tungsten oxide, cobalt oxide, nickel oxide, and/or the like, for example. Preferably, the Me source is a watersoluble raw material. The concentration of the Me source in the second slurry in mass fraction may be from 0.0002 to 0.002%, for example. The concentration of the Me source in the second slurry in mass fraction may be from 0.002 to 0.02%, for example.

The second carbon source may include a sugar, an organic acid, and/or the like, for example. The second carbon source may include glucose, sucrose, fructose, citric acid, and/or the like, for example. The second solvent may include water and/or the like, for example.

(e) Drying Step

This step includes drying the second slurry to produce a positive electrode active material (LMFP).

In this step, the second slurry may be dried by the same method as in the granulation step (b) (namely, by spray drying). In this step, the dried product after spray drying may be further dried, for example.

<Liquid-Type Battery>

In some present embodiments, the battery is a liquid-type battery. The liquid-type battery includes an electrolyte solution. In some present embodiments, the battery has a monopolar structure. In some present embodiments, the battery has a bipolar structure. As an example, a battery having a bipolar structure (a bipolar battery) will be described.

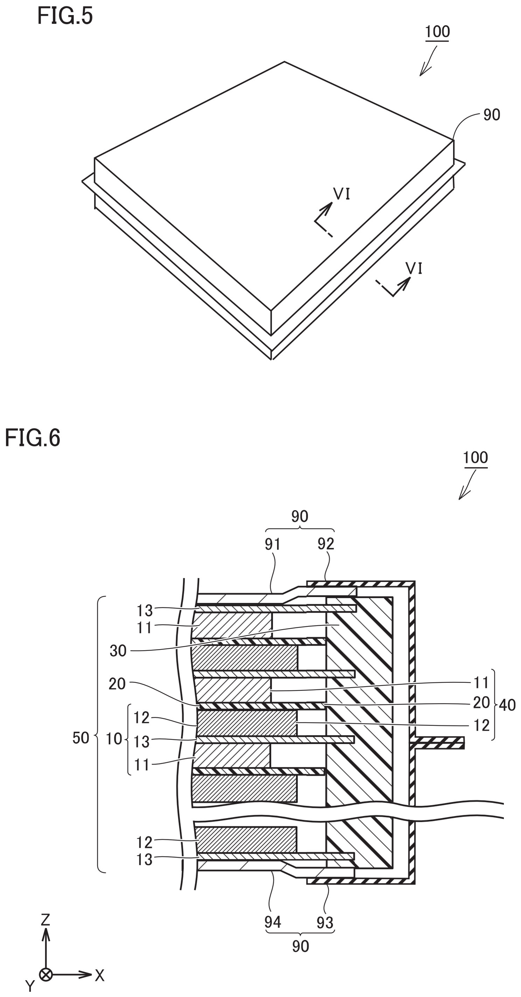

Fig. 5 is a schematic perspective view illustrating a battery according to the present embodiment. Fig. 6 is a schematic view of a cross section cut along the line VI-VI in Fig. 5. Hereinafter, "perpendicular-to-plane direction" refers to the direction of a normal to the surface of a sheet-form member (such as a foil sheet or an electrode, for example). "In-plane direction" refers to any direction that is orthogonal to the perpendicular-to-plane direction. In Fig. 6, the Z-axis direction corresponds to the perpendicular-to-plane direction. Each of the X-axis direction and the Y-axis direction is an example of an in-plane direction.

A battery 100 includes an exterior package 90 and a power generation element 50. Exterior package 90 accommodates power generation element 50. Exterior package 90 may include a first current collector plate 91, a first laminated film 92, a second laminated film 93, and a second current collector plate 94, for example. First laminated film 92 and second laminated film 93 are joined to each other at an end in an in-plane direction. At the joint portion between first laminated film 92 and second laminated film 93, a sealing material (not illustrated) may be interposed between first laminated film 92 and second laminated film 93.

At the ends in the stacking direction (the Z-axis direction), first current collector plate 91 and second current collector plate 94 are joined to power generation element 50, respectively. First laminated film 92 is joined to first current collector plate 91. Second laminated film 93 is joined to second current collector plate 94. At the joint portion between the current collector plate and the laminated film, a sealing material (not illustrated) may be interposed between the current collector plate and the laminated film.

Power generation element 50 includes a plurality of bipolar electrodes 10. Bipolar electrodes 10 are stacked in the perpendicular-to-plane direction (the Z-axis direction). In the perpendicular-to-plane direction, each bipolar electrode 10 includes a positive electrode layer 11, a current-collecting foil sheet 13, and a negative electrode layer 12 in this order. In an in-plane direction (for example, the X-axis direction), current-collecting foil sheet 13 extends outwardly beyond positive electrode layer 11 and negative electrode layer 12. For example, current-collecting foil sheet 13 may extend outwardly beyond positive electrode layer 11 and negative electrode layer 12 for the entire periphery in an in-plane direction.

Current-collecting foil sheet 13 is a conductor. For example, current-collecting foil sheet 13 may include a metal foil sheet, an electrically-conductive resin layer, and/or the like. For example, current-collecting foil sheet 13 may be formed by bonding an Al foil sheet and a Cu foil sheet together. A surface of current-collecting foil sheet 13 may have a carbon material applied thereto. The carbon material may include carbon black and/or the like, for example.

Power generation element 50 includes a sealing material 30. At an end in an in-plane direction, sealing material 30 is attached to current-collecting foil sheet 13. For example, sealing material 30 may be heat-sealed to current-collecting foil sheet 13. For example, sealing material 30 may be provided along the entire periphery in an in-plane direction. Sealing material 30 may include a resin material and/or the like, for example. Sealing material 30 seals interstices between current-collecting foil sheets 13 that are adjacent to each other in the perpendicular-to-plane direction. The interstices between current-collecting foil sheets 13 are thus sealed with sealing material 30, and thereby cells 40 are formed. A cell 40 is the smallest constituent unit of power generation element 50. Because it includes a plurality of cells 40, battery 100 may also be referred to as "a bipolar module". Each of cells 40 is hermetically sealed. Cells 40 are segregated from each other. Each of cells 40 includes positive electrode layer 11, a separator 20, negative electrode layer 12, and an electrolyte solution.

(Positive Electrode Layer)

Positive electrode layer 11 is adhered to one side of current-collecting foil sheet 13. For example, a groove may be formed in positive electrode layer 11. Positive electrode layer 11 may be formed in stripes, for example. Positive electrode layer 11 includes a positive electrode active material. That is, the electrode includes a positive electrode active material. The details of the positive electrode active material are as described above.

In addition to the positive electrode active material, positive electrode layer 11 may further include a conductive material, a binder, and the like, for example. The amount of the conductive material to be used may be, for example, from 0.1 to 10 parts by mass relative to 100 parts by mass of the positive electrode active material. The conductive material may include any component. The conductive material may include at least one selected from the group consisting of graphite, acetylene black (AB), Ketjenblack (registered trademark), vapor grown carbon fibers (VGCFs), carbon nanotubes (CNTs), and graphene flakes (GFs), for example.

The amount of the binder to be used may be, for example, from 0.1 to 10 parts by mass relative to 100 parts by mass of the positive electrode active material. The binder may include any component. The binder may include at least one selected from the group consisting of polyvinylidene difluoride (PVdF), vinylidene difluoride-hexafluoropropylene copolymer (PVdF-HFP), polytetrafluoroethylene (PTFE), carboxymethylcellulose (CMC), polyacrylic acid (PAA), polyvinyl alcohol (PVA), polyvinylpyrrolidone (PVP), polyoxyethylene alkyl ether, and derivatives of these, for example.

Positive electrode layer 11 may further include an inorganic filler, an organic filler, a solid electrolyte, a surface modifier, a dispersant, a lubricant, a flame retardant, a protective agent, a flux, a coupling agent, an adsorbent, and/or the like, for example. Positive electrode layer 11 may include polyoxyethylene allylphenyl ether phosphate, zeolite, silane coupling agent, $MoS_2$, $WO_3$, and/or the like, for example.

(Negative Electrode Layer)

Negative electrode layer 12 is adhered to one side of current-collecting foil sheet 13. Negative electrode layer 12 is positioned on the opposite side to the side on which positive electrode layer 11 is positioned. The area of negative electrode layer 12 may be greater than that of positive electrode layer 11. Negative electrode layer 12 includes a negative electrode active material.

The negative electrode active material may be in particle form, or may be in sheet form, for example. The D50 of the negative electrode active material may be 1 $\mu$m or more, or 5 $\mu$m or more, or 10 $\mu$m or more, for example. The D50 of the negative electrode active material may be 30 $\mu$m or less, or 20 $\mu$m or less, or 15 $\mu$m or less, or 10 $\mu$m or less, for example.

The negative electrode active material may include any component. The negative electrode active material may include at least one selected from the group consisting of carbon-based active material, alloy-based active material, Si-C composite material, Li metal, Li-based alloy, and lithium titanate, for example. In some present embodiments, the battery may be a Li-metal negative electrode battery.

The carbon-based active material may include at least one selected from the group consisting of graphite, soft carbon, and hard carbon, for example. The "graphite" collectively refers to natural graphite and artificial graphite. The graphite may be a mixture of natural graphite and artificial graphite. The mixing ratio (mass ratio) may be "(natural graphite)/(artificial graphite)=1/9 to 9/1", or "(natural graphite)/(artificial graphite)=2/8 to 8/2", or "(natural graphite)/(artificial graphite)=3/7 to 7/3", for example.

The surface of the graphite may be covered with amorphous carbon, for example. The surface of the graphite may be covered with another type of material, for example. This another type of material may include at least one selected from the group consisting of P, W, Al, and O, for example. The another type of material may include at least one selected from the group consisting of $Al(OH)_3$, AlOOH, $Al_2O_3$, $WO_3$, $Li_2CO_3$, $LiHCO_3$, and $Li_3PO_4$, for example.

The alloy-based active material may include at least one selected from the group consisting of Si, Li silicate, SiO, Si-based alloy, tin (Sn), SnO, and Sn-based alloy, for example.

SiO may be represented by the following general formula, for example.

$$SiO_x$$

In the formula, the relationship of $0<x<2$ is satisfied. For example, the relationship of $0.5 \leq x \leq 1.5$ or $0.8 \leq x \leq 1.2$ may be satisfied.

"Si-C composite material" refers to a composite material composed of a carbon-based active material (such as graphite) and an alloy-based active material (such as Si). For example, Si microparticles may be dispersed inside carbon particles. For example, Si microparticles may be dispersed inside graphite particles. For example, Li silicate particles may be covered with a carbon material (such as amorphous carbon).

(Separator)

Separator 20 is capable of separating positive electrode layer 11 from negative electrode layer 12. Separator 20 is electrically insulating. Separator 20 may include at least one selected from the group consisting of a resin film (a polymer film), an inorganic particle layer, and an organic particle layer, for example. Separator 20 may include a resin film and an inorganic particle layer, for example.

The resin film is porous. The resin film may include a microporous film, a nonwoven fabric, and/or the like, for example. The resin film includes a resin skeleton. The resin skeleton may be continuous in mesh form, for example. Gaps in the resin skeleton form pores. The resin film allows an electrolyte solution to permeate therethrough. The resin film may have an average pore size of 1 $\mu$m or less, for example. The resin film may have an average pore size from 0.01 to 1 $\mu$m, or from 0.1 to 0.5 $\mu$m, for example. "Average pore size" may be measured by mercury porosimetry. The resin film may have a Gurley value from 50 to 250 s/100cm$^3$, for example. "Gurley value" may be measured by a Gurley test method.

The resin film may include at least one selected from the group consisting of an olefin-based resin, a polyurethane-based resin, a polyamide-based resin, a cellulose-based resin, a polyether-based resin, an acrylic-based resin, a polyester-based resin, and the like, for example. The resin film may include at least one selected from the group consisting of polyethylene (PE), polypropylene (PP), polyamide (PA), polyamide-imide (PAI), polyimide (PI), aromatic polyamide (aramid), polyphenylene ether (PPE), and derivatives of these, for example. The resin film may be formed by stretching, phase separation, and/or the like, for example. The resin film may have a thickness from 5 to 50 $\mu$m, or from 10 to 25 $\mu$m, for example.

The resin film may have a monolayer structure. The resin film may be made of a PE layer, for example. A skeleton of a PE layer is formed of PE. The PE layer may have shutdown function. The resin film may have a multilayer structure, for example. The resin film may include a PP layer and a PE layer, for example. A skeleton of a PP layer is formed of PP. The resin film may have a three-layer structure, for example. The resin film may be formed by stacking a PP layer, a PE layer, and a PP layer in this order, for example. The thickness of the PE layer may be from 5 to 20 $\mu$m, for example. The thickness of the PP layer may be from 3 to 10 $\mu$m, for example.

The inorganic particle layer may be formed on the surface of the resin film. The inorganic particle layer may be formed on only one side of the resin film, or may be formed on both sides of the resin film. The inorganic particle layer may be formed on the side facing the positive electrode layer 11, or may be formed on the side facing the negative electrode layer 12. The inorganic particle layer may be formed on the surface of positive electrode layer 11, or may be formed on the surface of negative electrode layer 12.

The inorganic particle layer is porous. The inorganic particle layer includes inorganic particles. The inorganic particles may also be called "an inorganic filler". Gaps between the inorganic particles form pores. The inorganic particle layer may have a thickness from 0.5 to 10 $\mu$m, or from 1 to 5 $\mu$m, for example. The inorganic particles may include a heat-resistant material, for example. The inorganic particle layer that includes a heat-resistant material is also called "HRL (Heat Resistance Layer)". The inorganic particles may include at least one selected from the group consisting of boehmite, alumina, zirconia, titania, magnesia, silica, and the like. The inorganic particles may have any shape. The inorganic particles may be spherical, rod-like, plate-like, fibrous, and/or the like, for example. The inorganic particles may have a D50 from 0.1 to 10 $\mu$m, or from 0.5 to 3 $\mu$m, for example. The inorganic particle layer may further include a binder. The binder may include at least one selected from the group consisting of an acrylic-based resin, a polyamide-based resin, a fluorine-based resin, an aromatic-polyether-based resin, and a liquid-crystal-polyester-based resin, and the like, for example.

Separator 20 may include an organic particle layer, for example. Separator 20 may include an organic particle layer instead of the resin film, for example. Separator 20 may include an organic particle layer instead of the inorganic particle layer, for example. Separator 20 may include both the resin film and an organic particle layer. Separator 20 may include both the inorganic particle layer and an organic particle layer. Separator 20 may include the resin film, the inorganic particle layer, and an organic particle layer.

The organic particle layer may have a thickness from 0.1 to 50 $\mu$m, or from 0.5 to 20 $\mu$m, or from 0.5 to 10 $\mu$m, or from 1 to 5 $\mu$m, for example. The organic particle layer includes organic particles. The organic particles may also be called "an organic filler". The organic particles may include a heat-resistant material. The organic particles may include at least one selected from the group consisting of PE, PP, PTFE, PI, PAI, PA, aramid, and the like, for example. The organic particles may be spherical, rod-like, plate-like, fibrous, and/or the like, for example. The organic particles may have a D50 from 0.1 to 10 $\mu$m, or from 0.5 to 3 $\mu$m, for example.

Separator 20 may include a mixed layer, for example. The mixed layer includes both inorganic particles and organic particles.

(Electrolyte Solution)

The electrolyte solution is a liquid electrolyte. The electrolyte solution includes a solute and a solvent. The concentration of the solute may be from 0.5 to 1 mol/L, or from 1 to 1.5 mol/L, or from 1.5 to 2 mol/L, or from 2 to 2.5 mol/L, or from 2.5 to 3 mol/L, for example. "Mol/L" may also be expressed as "M". The solute includes a supporting salt (a Li salt). The solute may include an inorganic acid salt, an imide salt, an oxalato complex, a halide, and/or the like, for example. The solute may include at least one selected from the group consisting of $LiPF_6$, $LiBF_4$, $LiClO_4$, $LiAsF_6$, $LiSbF_6$, $LiN(SO_2F)_2$ "LiFSI", $LiN(SO_2CF_3)_2$ "LiTFSI", $LiB(C_2O_4)_2$ "LiBOB", $LiBF_2(C_2O_4)$ "LiDFOB", $LiPF_2(C_2O_4)_2$ "LiDFOP", $LiPO_2F_2$, $FSO_3Li$, LiI, LiBr, and derivatives of these, for example.

The electrolyte solution may include a carbonate-based solvent (a carbonate-ester-based solvent), for example. The solvent may include a cyclic carbonate, a chain carbonate, a fluorinated carbonate, and/or the like, for example. The solvent may include at least one selected from the group consisting of ethylene carbonate (EC), propylene carbonate (PC), butylene carbonate (BC), dimethyl carbonate (DMC), diethyl carbonate (DEC), ethyl methyl carbonate (EMC), monofluoroethylene carbonate (FEC), difluoroethylene carbonate, 4,4-difluoroethylene carbonate, trifluoroethylene carbonate, perfluoroethylene carbonate, fluoropropylene carbonate, difluoropropylene carbonate, and derivatives of these, for example.

The solvent may include a cyclic carbonate (such as EC, PC, FEC) and a chain carbonate (such as EMC, DMC, DEC). The mixing ratio between the cyclic carbonate and the chain carbonate (volume ratio) may be "(cyclic carbonate)/(chain carbonate)=1/9 to 4/6", or "(cyclic carbonate)/(chain carbonate)=2/8 to 3/7", or "(cyclic carbonate)/(chain carbonate)=3/7 to 4/6", for example.

The solvent may include a cyclic carbonate (such as EC, PC) and a fluorinated cyclic carbonate (such as FEC). The mixing ratio between the cyclic carbonate and the fluorinated cyclic carbonate (volume ratio) may be "(cyclic carbonate)/(fluorinated cyclic carbonate)=99/1 to 90/10", or "(cyclic carbonate)/(fluorinated cyclic carbonate)=9/1 to 1/9", or "(cyclic carbonate)/(fluorinated cyclic carbonate)=9/1 to 7/3", or "(cyclic carbonate)/(fluorinated cyclic carbonate) =3/7 to 1/9", for example.

The solvent may include EC, FEC, EMC, DMC, and DEC, for example. The volume ratio of these components may satisfy the relationship represented by the following equation, for example.

$$V_{EC}+V_{FEC}+V_{EMC}+V_{DMC}+V_{DEC}=10$$

In the above equation, each of $V_{EC}$, $V_{FEC}$, $V_{EMC}$, $V_{DMC}$, and $V_{DEC}$ represents the volume ratio of EC, FEC, EMC, DMC, and DEC, respectively.

The relationships of $1 \leq V_{EC} \leq 4$, $0 \leq V_{FEC} \leq 3$, $V_{EC}+V_{FEC} \leq 4$, $0 \leq V_{EUC} \leq 9$, $0 \leq V_{DMC} \leq 9$, $0 \leq V_{DEC} \leq 9$, $6 \leq V_{EMC}+V_{DMC}+V_{DEC} \leq 9$ are satisfied.

For example, the relationship of $1 \leq V_{EC} \leq 2$ or $2 \leq V_{EC} \leq 3$ may be satisfied.

For example, the relationship of $1 \leq V_{FEC} \leq 2$ or $2 \leq V_{FEC} \leq 4$ may be satisfied.

For example, the relationship of $3 \leq V_{EMC} \leq 4$ or $6 \leq V_{EMC} \leq 8$ may be satisfied.

For example, the relationship of $3 \leq V_{DMC} \leq 4$ or $6 \leq V_{DMC} \leq 8$ may be satisfied.

For example, the relationship of $3 \leq V_{DEC} \leq 4$ or $6 \leq V_{DEC} \leq 8$ may be satisfied.

The solvent may have a composition of "EC/EMC=3/7", "EC/DMC=3/7", "EC/FEC/DEC=1/2/7", "EC/DMC/EMC=3/4/3", "EC/DMC/EMC=3/3/4", "EC/FEC/DMC/EMC=2/1/4/3", "EC/FEC/DMC/EMC=1/2/4/3", "EC/FEC/DMC/EMC=2/1/3/4", "EC/FF-C/DMC/EMC=1/2/3/4" (volume ratio), and/or the like, for example.

The electrolyte solution may include an ether-based solvent. The electrolyte solution may include at least one selected from the group consisting of tetrahydrofuran (THF), 1,4-dioxane (DOX), 1,3-dioxolane (DOL), 1,2-dimethoxyethane (DME), 1,2-diethoxyethane (DEE), hydrofluoroether (HFE), ethylglyme, triglyme, tetraglyme, and derivatives of these, for example.

The electrolyte solution may include any additive. The amount to be added (the mass fraction to the total amount of the electrolyte solution) may be from 0.01 to 5%, or from 0.05 to 3%, or from 0.1 to 1%, for example. The additive may include an SEI (Solid Electrolyte Interphase) formation promoter, an SEI formation inhibitor, a gas generation agent, an overcharging inhibitor, a flame retardant, an antioxidant, an electrode-protecting agent, a surfactant, and/or the like, for example.

The additive may include at least one selected from the group consisting of vinylene carbonate (VC), vinylethylene carbonate (VEC), 1,3-propane sultone (PS), tert-amylbenzene, 1,4-di-tert-butylbenzene, biphenyl (BP), cyclohexylbenzene (CHB), ethylene sulfite (ES), propane sultone (PS), ethylene sulfate (DTD), γ-butyrolactone, phosphazene compound, carboxylate ester [such as methyl formate (MF), methyl acetate (MA), methyl propionate (MP), diethyl malonate (DEM), for example], fluorobenzene (such as monofluorobenzene (FB), 1,2-difluorobenzene, 1,3-difluorobenzene, 1,4-difluorobenzene, 1,2,3-trifluorobenzene, 1,2,4-trifluorobenzene, 1,3,5-trifluorobenzene, 1,2,3,4-tetrafluorobenzene, 1,2,3,5-tetrafluorobenzene, 1,2,4,5-tetrafluorobenzene, pentafluorobenzene, hexafluorobenzene, for example), fluorotoluene (such as 2-fluorotoluene, 3-fluorotoluene, 4-fluorotoluene, 2,3-difluorotoluene, 2,4-difluorotoluene, 2,5-difluorotoluene, 2,6-difluorotoluene, 3,4-difluorotoluene, octafluorotoluene, for example), benzotrifluoride (such as benzotrifluoride, 2-fluorobenzotrifluoride, 3-fluorobenzotrifluoride, 4-fluorobenzotrifluoride, 2-methylbenzotrifluoride, 3-methylbenzotrifluoride, 4-methylbenzotrifluoride, for example), fluoroxylene (such as 3-fluoro-o-xylene, 4-fluoro-o-xylene, 2-fluoro-m-xylene, 5-fluoro-m-xylene, for example), sulfur-containing heterocyclic compound (such as benzothiazole, 2-methylbenzothiazole, tetrathiafulvalene, for example), nitrile compound (such as adiponitrile, succinonitrile, for example), phosphate (such as trimethyl phosphate, triethyl phosphate, for example), carboxylic anhydride (such as acetic anhydride, propionic anhydride, oxalic anhydride, succinic anhydride, maleic anhydride, phthalic anhydride, benzoic anhydride, for example), alcohol (such as methanol, ethanol, n-propyl alcohol, ethylene glycol, diethylene glycol monomethyl ether, for example), and derivatives of these, for example.

The components described above as the solute and the solvent may be used as a trace component (an additive). The additive may include at least one selected from the group consisting of $LiBF_4$, LiFSI, LiTFSI, LiBOB, LiDFOB, LiDFOP, $LiPO_2F_2$, $FSO_3Li$, LiI, LiBr, HFE, DOX, PC, FEC, and derivatives of these, for example.

The electrolyte solution may include an ionic liquid. The ionic liquid may include at least one selected from the group consisting of a sulfonium salt, an ammonium salt, a pyridinium salt, a piperidinium salt, a pyrrolidinium salt, a morpholinium salt, a phosphonium salt, an imidazolium salt, and derivatives of these, for example.

In some present embodiments, the battery may include a gelled electrolyte. In other words, the battery may be a polymer battery. The gelled electrolyte may include an electrolyte solution and a polymer material. The polymer material may form a polymer matrix. The polymer material may include at least one selected from the group consisting of PVdF, PVdF-HFP, polyacrylonitrile (PAN), PVdF-PAN, polyethylene oxide (PEO), polyethylene glycol (PEG), and derivatives of these, for example.

<All-Solid-State Battery>

In some present embodiments, the battery is an all-solid-state battery. The all-solid-state battery may have a bipolar structure. The all-solid-state battery includes a solid electrolyte instead of the electrolyte solution and separator 20. That is, instead of separator 20, a solid electrolyte layer separates positive electrode layer 11 from negative electrode layer 12. The solid electrolyte layer includes a solid electrolyte and a binder, for example. A solid electrolyte may also be included in positive electrode layer 11 and negative electrode layer 12.

The solid electrolyte may be powder, for example. The D50 of the solid electrolyte may be 0.1 $\mu$m or more, or 0.2 $\mu$m or more, or 0.3 $\mu$m or more, or 0.4 $\mu$m or more, or 0.5 $\mu$m or more, or 0.6 $\mu$m or more, or 0.7 $\mu$m or more, or 0.8 $\mu$m or more, or 0.9 $\mu$m or more, or 1 $\mu$m or more, for example. The D50 of the solid electrolyte may be 5 $\mu$m or less, or 4 $\mu$m or less, or 3 $\mu$m or less, or 2 $\mu$m or less, or 1 $\mu$m or less.

The solid electrolyte may include at least one selected from the group consisting of a sulfide solid electrolyte, a halide solid electrolyte, an oxide solid electrolyte, a hydride solid electrolyte, and a nitride solid electrolyte, for example.

The sulfide solid electrolyte may include at least one selected from the group consisting of an amorphous phase, a crystalline phase, and a glass ceramic (crystallized glass) phase. The crystalline phase may be of argyrodite type, LGPS type, and/or the like, for example. The sulfide solid electrolyte includes Li and sulfur (S). In addition to Li and S, the sulfide solid electrolyte may further include any component.

The sulfide solid electrolyte may include at least one selected from the group consisting of $LiI-LiBr-Li_3PS_4$, $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-GeS_2-P_2S_5$, $Li_2S-P_2S_5$, $Li_{10}GeP_2S_{12}$, $Li_4P_2S_6$, $Li_7P_3S_{11}$, $Li_3PS_4$, and $Li_7PS_6$, for example.

For example, "$LiI-LiBr-Li_3PS_4$" refers to a sulfide solid electrolyte produced by mixing LiI, LiBr, and $Li_3PS_4$ in a freely-selected ratio in terms of amount of substance. For example, the sulfide solid electrolyte may be produced by a mechanochemical method. The mixing ratio may be expressed with the number placed in front of each raw material. For example, "$10LiI-15LiBr-75Li_3PS_4$" means that the mixing ratio is "$LiI/LiBr/Li_3PS_4=10/15/75$ (in amount of substance)".

The sulfide solid electrolyte may have a composition represented by the following general formula, for example.

$$xLi_2S\text{-}(1\text{-}x)P_2S_5$$

In the formula, x may be more than 0, or 0.1 or more, or 0.2 or more, or 0.25 or more, or 0.3 or more, or 0.4 or more, or 0.5 or more, or 0.6 or more, or 0.7 or more, or 0.75 or more, or 0.8 or more, or 0.9 or more, for example. x may be 1 or less, or 0.9 or less, or 0.8 or less, or 0.7 or less, or 0.75 or less, or 0.6 or less, or 0.5 or less, or 0.4 or less, or 0.3 or less, or 0.2 or less, or 0.1 or less, for example. For example, when x is 0.75, "$xLi_2S\text{-}(1\text{-}x)P_2S_5$" may have a composition of $Li_3PS_4$.

The sulfide solid electrolyte may have a composition represented by the following general formula, for example.

$$yLiI\text{-}zLiBr\text{-}(100\text{-}y\text{-}z)[xLi_2S\text{-}(1\text{-}x)P_2S_5]$$

In the formula, x may be 0.5 or more, or 0.6 or more, or 0.7 or more, or 0.75 or more, or 0.8 or more, or 0.9 or more, for example. x may be 1 or less, or 0.9 or less, or 0.8 or less, or 0.75 or less, or 0.7 or less, or 0.6 or less, for example. y may be 0 or more, or 5 or more, or 10 or more, or 15 or more, or 20 or more, or 25 or more, for example. y may be 30 or less, or 25 or less, or 20 or less, or 15 or less, or 10 or less, or 5 or less, for example. z may be 0 or more, or 5 or more, or 10 or more, or 15 or more, or 20 or more, or 25 or more, for example. z may be 30 or less, or 25 or less, or 20 or less, or 15 or less, or 10 or less, or 5 or less, for example.

The sulfide solid electrolyte may have a composition represented by the following general formula, for example.

$$Li_{7-x-2y}PS_{6-x-y}X_y$$

In the formula, relationships of "0<(7-x-2y)", "0<(6-x-y)", "0≤x", and "0≤y" are satisfied. X may include at least one selected from the group consisting of fluorine (F), chlorine (Cl), bromine (Br), and iodine (I), for example.

The sulfide solid electrolyte may have a composition represented by the following general formula, for example.

$$Li_{4-x}M_{1-x}P_xS_4$$

In the formula, x may be more than 0, or 0.1 or more, or 0.2 or more, or 0.3 or more, or 0.4 or more, or 0.5 or more, or 0.6 or more, or 0.7 or more, or 0.8 or more, or 0.9 or more, for example. x may be less than 1, or 0.9 or less, or 0.8 or less, or 0.7 or less, or 0.6 or less, or 0.5 or less, or 0.4 or less, or 0.3 or less, or 0.2 or less, or 0.1 or less, for example. M may include at least one selected from the group consisting of Al, Zn, In, Ge, Si, Sn, Sb, Ga, and Bi, for example.

The sulfide solid electrolyte may have a composition represented by the following general formula, for example.

$$Li_{10+x}Ge_{1+x}P_{2-x}S_{12}$$

In the formula, x may be 0 or more, or 0.1 or more, or 0.2 or more, or 0.3 or more, or 0.4 or more, or 0.5 or more, or 0.6 or more, for example. x may be 0.7 or less, or 0.6 or less, or 0.5 or less, or 0.4 or less, or 0.3 or less, or 0.2 or less, or 0.1 or less, for example. A sulfide solid electrolyte represented by the above general formula may include an LGPS-type crystalline phase, for example.

The halide solid electrolyte may have a composition represented by the following general formula, for example.

$$Li_{6-na}M_aX_6$$

In the formula, n represents an oxidation number of M. For example, M may include an atom whose oxidation number is +3. For example, M may include an atom whose oxidation number is +4. M may include at least one selected from the group consisting of Y, Al, Ti, Zr, Ca, and Mg, for example. The relationship of "0<a<2" may be satisfied, for example. X may include at least one selected from the group consisting of F, Cl, Br, and I, for example.

The halide solid electrolyte may have a composition represented by the following general formula, for example.

$$Li_{3-a}Ti_aAl_{1-a}F_6$$

In the formula, a may be 0 or more, or 0.1 or more, or 0.2 or more, or 0.3 or more, or 0.4 or more, or 0.5 or more, or 0.6 or more, or 0.7 or more, or 0.8 or more, or 0.9 or more, for example. a may be 1 or less, or 0.9 or less, or 0.8 or less, or 0.7 or less, or 0.6 or less, or 0.5 or less, or 0.4 or less, or 0.3 or less, or 0.2 or less, or 0.1 or less, for example.

The halide solid electrolyte may have a composition represented by the following general formula, for example.

$$Li_3YCl_aBr_bI_{6-a-b}$$

In the formula, the relationship of "0≤(a+b)≤6" may be satisfied, for example. a may be 0 or more, or 1 or more, or 2 or more, or 3 or more, or 4 or more, or 5 or more, for example. a may be 6 or less, or 5 or less, or 4 or less, or 3 or less, or 2 or less, or 1 or less, for example. b may be 0 or more, or 1 or more, or 2 or more, or 3 or more, or 4 or more, or 5 or more, for example. b may be 6 or less, or 5 or less, or 4 or less, or 3 or less, or 2 or less, or 1 or less, for example.

The oxide solid electrolyte may include at least one selected from the group consisting of $LiNbO_3$, $Li_{1.5}Al_{0.5}Ge_{1.5}(PO_4)_3$, $La_{2/3-x}Li_{3x}TiO_3$, and $Li_7La_3Zr_2O_{12}$, for example. The hydride solid electrolyte may include $LiBH_4$ and/or the like, for example. The nitride solid electrolyte may include $Li_3N$, $Li_3BN_2$, and/or the like, for example.

[Examples]

<Test Example 1>

<Production of Positive Electrode Active Material>

(No. 1)

(a) First Mixing Step

Lithium hydroxide monohydrate, manganese carbonate, ferric phosphate, and lithium dihydrogen phosphate were prepared in amounts that satisfied the composition ratio specified in the composition formula "$Li_{1.04}Mn_{0.6}Fe_{0.4}PO_4$". Glucose was prepared in such an amount that the mass fraction of C became 2% relative to the mass of LMFP. The materials thus prepared and water were mixed together to form a first slurry. The solid concentration of the first slurry was from 10 to 50% in mass fraction. Wet grinding was carried out to achieve a D50 of 0.30 $\mu$m.

(b) Granulation Step

The first slurry was spray dried to form precursor particles. The temperature at the air inlet was 250°C, the temperature at the air outlet of the spray dryer was 115±15°C, the air intake pressure was 2.0 MPa, and the nozzle pressure of the spray nozzle was 0.2±0.1 MPa. The target value of the D50 of the precursor particles was 9±5 $\mu$m.

(c) Calcination Step

In a nitrogen gas atmosphere, the precursor particles were calcined, and thereby a positive electrode active material (LMFP) was synthesized. The conditions in this step are as follows. Firstly, the furnace temperature is raised at a temperature raising rate of 3°C/minute to reach 200°C. The furnace temperature is maintained at 200°C for 1 hour. Then, the furnace temperature is raised at a temperature raising rate of 5°C/minute to reach 650°C. The furnace temperature is maintained at 650°C for 5 hours. Subsequently, the furnace temperature is lowered at a temperature lowering rate of 2°C/minute to reach 400°C. Furthermore, the furnace temperature is lowered at a temperature lowering rate of 15°C/minute to reach room temperature.

(Nos. 2 to 4)

Under the same conditions as in No. 1, the steps (a) to (c) were implemented. It should be noted that LMFP in No. 1 is equivalent to "first particles" described below.

(d) Second Mixing Step

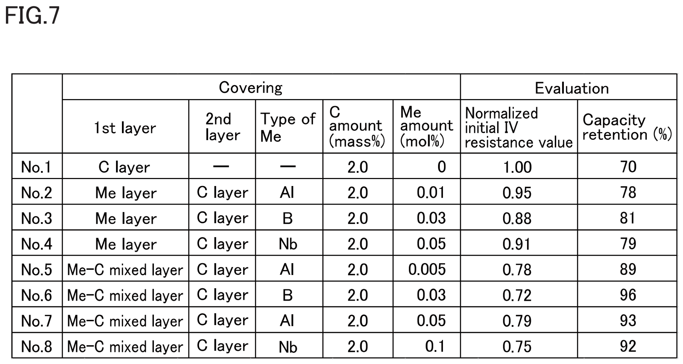

Lithium hydroxide and an Me source were prepared in such amounts that the type of Me in the covering and the ratio thereof (in amount of substance, relative to the amount of substance of LMFP which was defined as 100 mol%) satisfied those specified in Fig. 7. The materials thus prepared, the first particles, and water were mixed together to form a second slurry. As the Me source, $Al_2O_3$ was used when Me was Al, $B_2O_3$ was used when Me was B, and NbO was used when Me was Nb.

(e) Drying Step

The second slurry was spray dried to form second particles. This step was implemented under the same conditions as in the granulation step (b) in No. 1.
The dried product after spray drying was further subjected to hot air drying treatment at 200°C for 6 hours, and thereby a positive electrode active material (LMFP) was produced.

(Nos. 5 to 8)

Steps (a) to (c)

In the first step, glucose was prepared in such an amount that the mass fraction of C became 1% relative to the mass of LMFP. Except for this change in the conditions of the first mixing step, the same conditions as in No. 1 were adopted to implement the steps (a) to (c). It should be noted that LMFP in No. 1 is equivalent to "first particles" described below.

(d) Second Mixing Step

Lithium hydroxide and an Me source were prepared in such amounts that the ratio of Me in the covering (in amount of substance, relative to the amount of substance of LMFP which was defined as 100 mol%) became the value specified in Fig. 7. Moreover, glucose was prepared in such an amount that the mass fraction of C became 1% relative to the mass of LMFP. The materials thus prepared, the first particles, and water were mixed together to form a second slurry.

(e) Drying Step

The second slurry was spray dried to form second particles. This step was implemented under the same conditions as in the granulation step (b) in No. 1.

The dried product after spray drying was further subjected to hot air drying treatment at 200°C for 6 hours, and thereby a positive electrode active material (LMFP) was produced.

(Preparation of Coin Cell)

The positive electrode active material, a conductive material (acetylene black) and a binder (PVdF) were mixed together to form a mixture. The mixing ratio (in mass) was "(positive electrode active material)/(conductive material)/-binder=92/5/3". The mixture was dispersed in a solvent (N-methyl-2-pyrrolidone) to form a paste. The solid concentration of the paste was 50% in mass fraction. The paste was applied to the surface of an Al foil sheet, followed by drying, and thereby a positive electrode layer was formed. The density of the positive electrode layer was adjusted to 1.8 g/cm$^3$ with a roll press, and thereby a positive electrode raw sheet was formed. The positive electrode raw sheet was vacuum dried at 120°C for 12 hours. After drying, the positive electrode raw sheet was die-cut to form a disk-shaped sample (diameter, 14 mm).

Inside a glove box, a coin cell was assembled. The cell configuration is as described below.

Working electrode: Disk-shaped sample (positive electrode)
Counter electrode: Li foil sheet
Separator: Porous polymer film
Electrolyte solution: "EC/DMC=317 (in volume)", LiPF$_6$ (1 mol/L)

Based on the discharged capacity (stoichiometric capacity) calculated from the mass of the applied positive electrode layer, the rate corresponding to 1 C is determined. "C" is a symbol denoting a rate of current (an hour rate). At a rate of 1 C, stoichiometric capacity is charged or discharged in 1 hour.

<Evaluation>

(Measurement)

By the method described above, TEM-EDS analysis was carried out. For No. 1, the results revealed the presence of a region where C was detected (a C layer) and the presence of a region where Mn and Fe were detected, in the direction from the surface side of the covering toward the inner side. For Nos. 2 to 4, the results revealed the presence of a region where Me was detected (an Me layer), the presence of a region where C was detected (a C layer), and the presence of a region where Mn and Fe were detected, in the direction from the surface side of the covering toward the inner side. For Nos. 5 to 8, the results revealed the presence of a region where Me and C were detected (an Me-C mixed layer), the presence of a region where C was detected (a C layer), and the presence of a region where Mn and Fe were detected, and it was found that the region where Me and C were detected (an Me-C mixed layer) extended for 1 nm or more from the outermost surface (which means that the thickness was 1 nm or more).

(Initial IV Resistance Value)

By the procedure described below, initial IV resistance values were calculated. It is conceivable that the lower the initial IV resistance value is, the better the output properties are.

The voltage of the coin cell prepared in the above-described manner is adjusted to an SOC (state of charge) of 50% relative to the SOC (100%) for a voltage range of 3.0 to 4.3 V. Discharging is carried out for 10 seconds in an environment at 0°C at rates of 0.1 C, 0.3 C, 0.5 C, 0.7 C, and 1.0 C, respectively, and the voltage drop [V] is measured. The relationship between the value of current and the voltage drop [V] is plotted, followed by drawing an approximate line by a linear function, and the amount corresponding to the slope is regarded as the initial IV resistance value. Results are given in Fig. 7. The normalized initial IV resistance value in Fig. 7 is a relative value relative to the initial IV resistance value in No. 1, which is defined as 1.00.

(Capacity Retention)

By the procedure described below, capacity retention was calculated. It is conceivable that the higher the capacity retention is, the better the endurance is.

The coin cell prepared in the above-described manner is subjected to repeated charge and discharge at 0.3 C in an environment at 60°C, with an SOC (state of charge) for a voltage range of 3.0 to 4.3 V being defined as 100%. Discharged capacity after the 100th cycle (defined as "post-100-cycle discharged capacity") is determined, and ((post-100-cycle discharged capacity)/(1st-cycle discharged capacity))×100% is regarded as capacity retention. Results are given in Fig. 7.

<Results>

As seen in Fig. 7, when the conditions according to the present disclosure are satisfied, the initial IV resistance value tends to be low and the capacity retention tends to be high.

Although the embodiments of the present disclosure have been described, the embodiments disclosed herein are illustrative and non-restrictive in any respect. The scope of the present disclosure is defined by the terms of the claims, and is intended to encompass any modifications within the meaning and the scope equivalent to the terms of the claims.

**Claims**

1. A positive electrode active material comprising:

   a primary particle (1); and
   a covering (5), wherein
   the primary particle (1) includes an olivine-type phosphate compound,
   the covering (5) covers at least part of a surface of the primary particle (1),
   the covering (5) includes carbon and Me, and
   Me is at least one type selected from the group consisting of a Group 4 matallic element, a Group 5 metallic element, a Group 6 matellic element, a Group 9 metallic element, a Group 10 metallic element, a Group 13 metallic element, and boron (B).

2. The positive electrode active material according to cle=aim 1, wherein

   the Group 4 matellic element is titanium (Ti) or zirconium (Zr),
   the Group 5 matellic element is vanadium (V) or niobium (Nb),
   the Group 6 matellic element is chromium (Cr), molybdenum (Mo), or tungsten (W),
   the Group 9 matellic element is cobalt (Co),
   the Group 10 matellic element is nickel (Ni), and
   the Group 13 matellic element is aluminium (Al).

3. The positive electrode active material according to claim 1 or 2, wherein TEM- EDS analysis reveals the presence of a first region (5a) at which carbon and Me are detected, inside to corvering (5).

4. The positive electrode active material according to claim 3, wherein the first region (5a) has a thickness of 1 nm or more.

5. The positive electrode active material according to claim 3 or 4, wherein the first region (5a) is present within an area that extends for 20 nm or less from a surface of the covering (5).

6. The positive electrode active material according to any one of claims 3 to 5, wherein the covering (5) includes a polyanion-structure-containing compound including a polyanion structure in which an oxygen atom is coordinated to Me.

7. The positive electrode active material according to claim 6, wherein the polyanion-structure-containing compound has an amorphous structure.

8.  The positive electrode active material according to any one of claims 1 to 7, wherein the primary particles (1) from a secondary particle (2).

9.  The positive electrode active material according to any one of claims 1 to 8, wherein the olivine-type phosphate compound is lithium manganese iron phosphate.

10. An electrode comprising:

    a positive electrode layer (11), wherein
    the positive electrode layer (11) includes the positive electrode active material according to any one of claims 1 to 9.

11. A battery (100) comprising the electrode according to claim 10.

12. The battery (100) according to claim 11, having a bipolar structure.

FIG.1

FIG.2

FIG.3

FIG.4

FIG.5

FIG.6

FIG.7

| | Covering | | | | | Evaluation | |
|---|---|---|---|---|---|---|---|
| | 1st layer | 2nd layer | Type of Me | C amount (mass%) | Me amount (mol%) | Normalized initial IV resistance value | Capacity retention (%) |
| No.1 | C layer | — | — | 2.0 | 0 | 1.00 | 70 |
| No.2 | Me layer | C layer | Al | 2.0 | 0.01 | 0.95 | 78 |
| No.3 | Me layer | C layer | B | 2.0 | 0.03 | 0.88 | 81 |
| No.4 | Me layer | C layer | Nb | 2.0 | 0.05 | 0.91 | 79 |
| No.5 | Me−C mixed layer | C layer | Al | 2.0 | 0.005 | 0.78 | 89 |
| No.6 | Me−C mixed layer | C layer | B | 2.0 | 0.03 | 0.72 | 96 |
| No.7 | Me−C mixed layer | C layer | Al | 2.0 | 0.05 | 0.79 | 93 |
| No.8 | Me−C mixed layer | C layer | Nb | 2.0 | 0.1 | 0.75 | 92 |

Europäisches Patentamt
European Patent Office
Office européen des brevets

# EUROPEAN SEARCH REPORT

**Application Number**

EP 25 22 6131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/244309 A1 (SHENZHEN DYNANONIC CO LTD [CN]; QUJING DYNANONIC CO LTD [CN] ET AL.) 5 December 2024 (2024-12-05) | 1-5,8-12 | INV.<br>H01M4/136<br>H01M4/36 |
| Y | * see EP 4 722 151 A1 *<br>& EP 4 722 151 A1 (SHENZHEN DYNANONIC CO LTD [CN]) 8 April 2026 (2026-04-08)<br>* paragraphs [0081] - [0090]; claims 1-20; figures 2-4 * | 6,7 | H01M4/58<br>H01M4/62<br>H01M10/0525 |
| | ----- | | |
| Y | DIVAKARAN ARUN MAMBAZHASSERI ET AL: "Rational design on materials for developing next generation lithium-ion secondary battery", PROGRESS IN SOLID STATE CHEMISTRY PERGAMON PRESS, OXFORD., GB, vol. 62, 29 October 2020 (2020-10-29), XP086587657, ISSN: 0079-6786, DOI: 10.1016/J.PROGSOLIDSTCHEM.2020.100298 [retrieved on 2020-10-29]<br>* paragraph 4.2 * | 6,7 | |
| | ----- | | TECHNICAL FIELDS SEARCHED (IPC) |
| A | EP 2 015 382 A1 (HIGH POWER LITHIUM S A [CH]) 14 January 2009 (2009-01-14)<br>* paragraph [0004]; claims 1-14 * | 1-12 | H01M |
| | ----- | | |

The present search report has been drawn up for all claims

| Place of search | Date of completion of the search | Examiner |
|---|---|---|
| Munich | 18 May 2026 | Szekely, Noemi Kinga |

EPO FORM 1503 03.82 (P04C01)

## ANNEX TO THE EUROPEAN SEARCH REPORT
## ON EUROPEAN PATENT APPLICATION NO.

EP 25 22 6131

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2026

| Patent document cited in search report | Publication date | Patent family member(s) | | Publication date |
|---|---|---|---|---|
| WO 2024244309 A1 | 05-12-2024 | CN | 116692812 A | 05-09-2023 |
| | | EP | 4722151 A1 | 08-04-2026 |
| | | US | 20260028240 A1 | 29-01-2026 |
| | | WO | 2024244309 A1 | 05-12-2024 |
| EP 2015382 A1 | 14-01-2009 | AT | E522941 T1 | 15-09-2011 |
| | | CA | 2699999 A1 | 22-01-2009 |
| | | CN | 101803075 A | 11-08-2010 |
| | | EP | 2015382 A1 | 14-01-2009 |
| | | EP | 2210300 A1 | 28-07-2010 |
| | | JP | 5465173 B2 | 09-04-2014 |
| | | JP | 2010533354 A | 21-10-2010 |
| | | KR | 20100048994 A | 11-05-2010 |
| | | TW | 200913354 A | 16-03-2009 |
| | | US | 2010178562 A1 | 15-07-2010 |
| | | WO | 2009010895 A1 | 22-01-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024231840 A

- JP 2015056222 A